(19) Europäisches Patentamt
European Patent Office
Office européen des brevets

(11) Publication number: 0 348 963
A2

# (12) EUROPEAN PATENT APPLICATION

(21) Application number: 89111825.9

(51) Int. Cl.4: C08F 4/12

(22) Date of filing: 29.06.89

(30) Priority: 29.06.88 CS 4589/88
29.06.88 CS 4590/88
30.08.88 CS 5851/88

(43) Date of publication of application:
03.01.90 Bulletin 90/01

(84) Designated Contracting States:
BE DE GB IT NL SE

(71) Applicant: CESKOSLOVENSKA AKADEMIE VED
Narodni 3
Praha 1(CS)

(72) Inventor: Lukás, Rudolf, Dipl.-Ing.
Doubravinova 1/129
Praha 6(CS)
Inventor: Toman, Ludek, Dipl.-Ing.
Pod vilami 11
Praha 4(CS)
Inventor: Prádova, Olga, Dipl.-Ing.
Tuniská 633
Praha 6(CS)
Inventor: Palecková, Vera, Dipl.-Ing.
U novych domu 527/1
Praha 4(CS)
Inventor: Pacovsky, Vladimir
Cerveny Ujezd 157
Unhost(CS)
Inventor: Kubánek, Vladimir, Prof.-Ing.
Gromovové 66
Praha 6(CS)
Inventor: Dolezai, Vladimir, Dipl.-Ing.
Skrobárova 21
Praha 3(CS)

(74) Representative: Patentanwälte Beetz sen. - Beetz jun. Timpe - Siegfried - Schmitt-Fumian- Mayr
Steinsdorfstrasse 10
D-8000 München 22(DE)

## (54) Polymers, method for their preparation and initiator system.

(57) The invention relates to (co)polymers obtainable by polymerization of cationically polymerizable monomers in the presence of a novel initiator system consisting of an initiator component formed by an active chlorine-containing aliphatic low-molecular mass, oligomeric and/or polymeric substance and a Lewis acid, selected from boron trichloride and titanium tetrachloride either alone or in ad-mixtures with ferric chloride. The polymers contain the chemically bound initiator component corresponding to the used active chlorine-containing organic substance.

EP 0 348 963 A2

## Polymers, method for their preparation and initiator system

The invention relates to a novel initiator system and its use for the production of novel polymers and copolymers.

For the polymerization of isobutene, which is a typical cationically polymerizable monomer, Lewis acids such as boron trichloride ($BCl_3$), boron trifluoride ($BF_3$), titanium tetrachloride ($TiCl_4$), titanium tetrabromide ($TiBr_4$), and tin tetrachloride ($SnCl_4$) are used, which, however, require the presence of a protic/protogenic substance.

The non-reactivity of the system $BCl_3$ - isobutene in the absence of a protogenic substance was described already in 1947 (P.M. Plesh, M. Polanyi, W.A. Skinner, J. Chem. Soc. 257 (1947)) and later by other experts in the field of fundamental research of cationic polymerization (M. Chmeliř , M. Marek, Collect. Czech. Chem. Commun. 32, 3047 (1964); J.P. Kennedy, S. Y. Huang, C. Feinberg, J. Polym. Sci., Polym. Chem. Ed. 15, 2801 (1977)). It is obvious from this literature that the polymerization of isobutene does not proceed with $BCl_3$ alone in the absence of a protogenic substance (e.g., water, hydrogen chloride, hydrogen fluoride) both in a non-polar medium and a polar medium. Further, it proceeds in the presence of a protogenic substance (water, hydrogen chloride) in a polar medium (e.g., dichloromethane, methyl chloride) only at low temperatures ($T < -50\ ^\circ C$). The polarity of the medium strongly affects the course of cationic polymerization of isobutene, and the above referred literature proved that the system isobutene $BCl_3$ - protogenic compound ($H_2O$ or HCl) is completely non-reactive if the polymerization is carried out in a non-polar medium, for example, in the monomer as such, i.e. in bulk. The non-reactivity of isobutene in the presence of the initiation system $BCl_3/H_2O$ or with use of $BCl_3$ alone in the absence of a polar medium may be seen from Table 1, where results of reproduction of experiments described by Kennedy in 1977 by the authors of this invention are summarized.

Table 1

| Reactivity of isobutene in the presence of boron trichloride in a non-polar medium, i.e. in bulk, and with various initiators | | | | | |
|---|---|---|---|---|---|
| Initiator | Concentration [mol/1 • $10^2$] | $BCl_3$ concentration [mol/1 • $10^2$] | Time (h) | Conversion | Reference |
| - | - | 12.4 | 48 | - | Kennedy (1977) |
| - | - | 35.8 | 1680 | polymer traces | Kennedy (1977) |
| $H_2O$ | 47.8 | 12.4 | 48 | - | Kennedy (1977) |
| - | - | 22.0 | 48 | - | |
| - | - | 28.4 | 168 | polymer traces | |
| HCl | 28.4 | 28.4 | 72;150 | - | |
| t-BuCl | 28.4 | 28.4 | 48 | - | |
| t-BuCl | 45.0 | 33.3 | 168 | polymer traces | |
| $CH_3CH=CHCH(Cl)C_5H_{11}$ | 10.0 | 25.1 | 168 | polymer traces | |

Also the recently found initiation system $BCl_3$ -t-butyl chloride (L. Toman, S. Pokorný, J. Spěváček , J. Daňhelka , Polymer 27, 1121 (1986)) is non-reactive in the absence of dichloromethane also for very long reaction times (7 days), as follows from Table 1.

As a consequence of the commonly known non-reactivity of isobutene in the presence of $BCl_3$ in a non-polar medium (i.e., for example, for bulk polymerization ) at temperatures below -50 °C, $BCl_3$ was rejected in the literature as a possible co-initiator for grafting of poly(vinyl chloride) (PVC), e.g., with isobutene. This is because the chains of PVC contain only very small amounts of constitutional units with allyl-bonded chlorine only, about 0.02 mol.-%), which are still regarded according to the literature as the only possible reactive groups able to form anchored cationic centres in the chains in the presence of $BCl_3$, but only in a polar medium, e.g., in dichloromethane. Probably for this reason experiments carried out until now using very low concentrations of components (2 % solution of PVC in dichloromethane; isobutene 0.9 mol/l; $BCl_3$ $10^{-2}$ mol/l; S.N. Gupta, J.P. Kennedy, Polym. Bull. 1, 253 (1979)) were unsuccessful and let to the general prejudice that grafting of PVC is not possible in the presence of $BCl_3$. Thus, polymerization of isobutene initiated with the system PVC/$BCl_3$ could not be realized, and the literature describes only grafting of a

particular PVC comprising an increased amount of constitutional units with allyl-bonded chlorine in the chains obtained by dehydrochlorination with a base prior to use (J.P. Kennedy, 1979).

The invention is based on the quite surprising finding that isobutene can be graft-copolymerized on PVC, co polymers of vinyl chloride and 2-chloropropene (VC/2-CP), on PVC-(A) (PVC-(A) being PVC containing about 0.15 mol.-% of constitutional units with allyl-bonded chlorine in the chain), etc. in the absence of a polar solvent, i.e. in the monomer as such, in the presence of $BCl_3$ at temperatures of about -70 °C, i.e. under conditions where the polymerization of isobutene does not proceed by any so far known initiation system comprising $BCl_3$ present as one component of the initiation system, as explained above, whereby the polymerization of isobutene is initiated by the macromolecular compounds.

It is the object of the present invention to provide novel initiator systems for the homo- and copolymerization and the graft-copolymerization of cationically polymerizable monomers which comprises a Lewis acid as catalyst component, a method for obtaining such polymers, and novel homo- and copolymers on the basis of these monomers and their use.

The above object is achieved according to the claims. The dependent claims relate to preferred embodiments.

The invention is based on the general concept that cationically polymerizable monomers can be polymerized within a wide temperature range in the presence of a Lewis acid such as $BCl_3$ and $TiCl_4$ when an aliphatic low molecular mass, oligomeric and/or polymeric substance is present in the polymerization system which contains active chlorine, particularly chlorine atoms which are linked to secondary and/or tertiary carbon atoms, or which are activated by an adjacent C = C double bond.

In accordance therewith, the initiator systems for the homopolymerization, copolymerization or graft copolymerization of cationically polymerizable monomers, are characterized according to the invention in that they consist of

(A) an initiator component

consisting of at least one aliphatic low-molecular mass, oligomeric and/or polymeric active chlorine-containing substance

and

(B) a co-initiator component

consisting of at least one Lewis acid.

According to a preferred embodiment, the initiator systems according to the invention are characterized in that the active chlorine-containing substance of initiator component A comprises at least two chlorine atoms linked to secondary carbon atoms being in mutual 1,3-position and has ≥ 5 carbon atoms, and/or it comprises at least one structural unit wherein a chlorine atom is linked to a tertiary carbon atom and has ≥ 10 carbon atoms.

Preferred active chlorine-containing substances of initiator component A comprise at least one structural unit of the general formula

```
   |  |    |    |   |
  -C-C¹ -C² -C³ -C-
   |  |    |    |   |
      Cl       Cl      .
```

wherein two active chlorine atoms are linked to secondary and/or tertiary carbon atoms being in mutual 1,3-position to each other.

Preferred active chlorine-containing substances of initiator component A are 2,4-dichloropentane, 2,4,6-trichloroheptane, 2,4,6,8-tetrachlorononane, poly(vinyl chloride), poly(vinyl chloride) comprising or being enriched with chloroallyl structures, chlorinated poly(vinyl chloride), chlorinated poly(ethylene), chlorinated poly(propylene), vinyl chloride/2-chloropropene copolymers, hydrochlorinated poly(isoprene), hydrochlorinated butyl rubber, chlorinated paraffins and/or copolymers of vinyl chloride, preferably vinyl chloride/2-chloropropene copolymers.

The Lewis acids of co-initiator component B are preferably selected from $BCl_3$ and $TiCl_4$ and mixtures of $BCl_3$ and/or $TiCl_4$ with $FeCl_3$.

The method of the invention for preparing homopolymers, copolymers or graft copolymers of cationically polymerizable monomers by (co)polymerization of the monomers in the presence of an initiator system, is characterized in that an initiator system as defined alone is used.

The (co)polymerization is carried out preferably at a temperature of -100 to +20 °C and/or at a molar ratio of the Lewis acid(s) of co-initiator component B to the cationically polymerizable monomer(s) of $1 \cdot 10^{-5}$:1 to 50:1.

The (co)polymerization may be carried out in bulk, i.e. without solvent, or in the presence of one or more polar halogenated solvents or in the presence of mixtures of one or more polar halogenated solvents with one or more non-polar solvents or in the presence of one or more aromatic solvents or in the presence of mixtures of one or more polar halogenated solvents with one or more aromatic solvents, or in the presence of a polar halogenated monomer, preferably vinyl chloride.

In accordance with à preferred embodiment of this method the solvents are added during the (co)-polymerization.

The cationically polymerizable monomers are preferably selected from n-butene, isobutene, styrene, α-methylstyrene, isoprene, 1,3-butadiene, 2,3-dimethylbutadiene-1,3, 1,3-pentadiene, piperylene and chloroprene.

Advantageously, methyl chloride, ethyl chloride, dichloromethane and/or ethyl chloride are used as polar solvents.

Suitable non-polar solvents are heptane, cyclohexane, carbon tetrachloride, benzene and toluene.

In accordance with another preferred embodiment, a monomer mixture of isobutene and isoprene containing up to 15 mass-% a diolefinic monomer is used.

The invention also relates to the homopolymers, copolymers and graft copolymers which may be obtained according to the above method with use of the above-defined initiator systems.

According to the invention, after mixing e.g. a powdery commercial or specifically prepared PVC, PVC-(A), or a vinyl chloride/2-chloropropene copolymer (VC/2-CP) with isobutene and $BCl_3$ at a temperature of about -70 °C, it can be observed after a short time (about 5 min) already by visual inspection that polyisobutene (PIB) grows on the solid particles. The volume of the solid phase (PIB anchored on the solid phase, e.g. of PVC, increased with time, whereas the liquid phase (monomer) remains clear, and its viscosity does not increase even after several days. This enables to follow the kinetics e.g. of PVC grafting with isobutene in the absence of an auxiliary solvent even at low temperatures, for example, by a dilatometric method.

As it was already stated (Kennedy, 1979), the partial dehydrochlorination of PVC, e.g., with sodium hydroxide, leads to an increased content of constitutional units with allyl-bound chlorine in the chain. However, the dehydrochlorination of PVC is disadvantageous in technical and economical respect, because it includes dissolution of PVC in an organic solvent, reaction with a base, precipitation of PVC from the solvent, and subsequent thorough washing with water and careful drying.

Although the reactivity of PVC in the presence of some other Lewis acids is described in the literature, as in the presence of aluminum trichloride ($AlCl_3$) and titanium tetrachloride ($TiCl_4$) (P.H. Plesh, Chem. Ind. 1958; GB-A-817 684), it is obvious that grafting of PVC with cationically polymerizing monomers is of low efficiency and therefore disadvantageous, because it rather leads to the formation of homopolymers than to grafted PVC, which fact was critically suggested earlier by Kennedy (J.P. Kennedy, Cationic graft copolymerization, J. Appl. Polym. Sci., Appl. Polym. Symp. 30, Akron). It was stated that the dehydrochlorination of the polymer occurs after mixing PVC with $AlCl_3$ or $TiCl_4$, and even a small amount of the formed hydrogen chloride (HCl) in the reaction system creates a very reactive initiation system ($HCl/AlCl_3$ or $HCl/TiCl_4$), which preferably protonically initiates, for example, the polymerization of isobutene and leads to polyisobutene with only a small yield of grafted PVC.

The use of expensive co-initiators such as silver hexafluoroantimonate ($AgSbF_6$) (E. Franta, F. Afshar-Taromi and P. Rempp, Macromol. Chem. 177, 2191 (1976)) has no chance for practical use for PVC grafting on an industrial scale for economical reasons.

Alkyl aluminum compounds, for example, $Et_2AlCl$ and $Et_3Al$, were also used as co-initiators for the grafting of PVC, which was carried out either in solution or in solid state on powdery PVC or on films (J.P. Kennedy, Appl. Polym. Symp., no. 30 (1977); B. Iván, J.P. Kennedy, Z. Kelen, F. Tüdös, J. Macromol. Sci.-Chem., A16, 1473 (1981); A. Vidal, J.B. Donnet, J.P. Kennedy, J. Polym. Sci., Polym. Lett. Ed. 15, 585 (1977)). Iván (1981) described the grafting of isobutene on PVC in the presence of an alkylaluminum compound, where first vinyl chloride was radically copolymerized with 2-chloropropene, and the resulting vinyl chloride/2-chloropropene copolymer was then grafted in the presence of diethylaluminum chloride ($Et_2AlCl$). This procedure is disadvantageous because alkylation or hydridation of ends of growing polyisobutene branches occurs in the presence of the alkylaluminum compound which leads to the termination of the reaction by extinction of counterions, whereby the resulting grafted macromer is then no longer reactive (J.P. Kennedy, Cationic Polymerization of Olefins: A Critical Inventory, John Wiley and Sons, A Wiley Interscience Publication, New York 1975, p. 245; J.P. Kennedy and E. Maréchal, Carbocationic

Polymerization, John Wiley and Sons, A. Wiley-Interscience Publication, New York 1982, p. 221-223).

It has been further discovered according to the invention that the polymerization e.g. of isobutene in the presence of $BCl_3$ is initiated not only by, e.g., PVC or VC-2CP copolymers, but also by model compounds of PVC, such as e.g., 2,4-dichloropentane.

Also initiator systems on the basis of a Lewis acid such as $BCl_3$ and PVC model compounds comprising the general structure

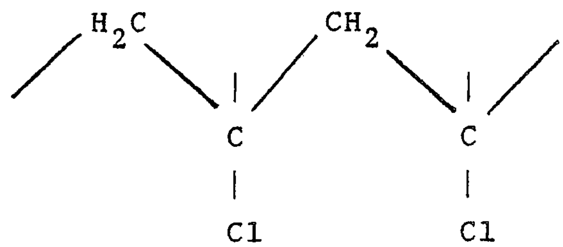

,

such as derived from poly(2-chloropropene),

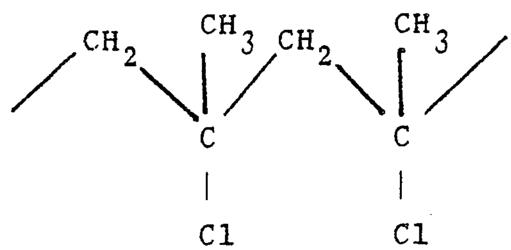

,

or such as 2,4-dichloropentane,

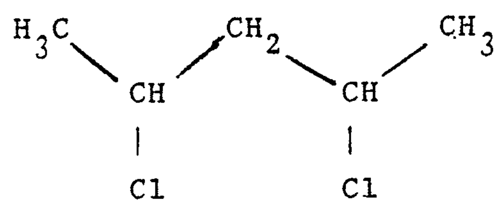

,

or 2,4,6-trichloroheptane,

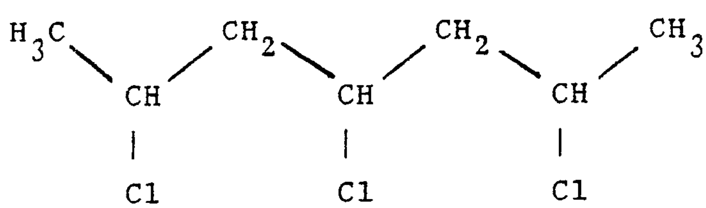

,

etc., have not yet been described in the literature for the polymerization of alpha-olefins.

It is generally known that the polymerization of isobutene with boron trichloride does not proceed at -20 °C, neither in the presence of a protogenic substance such as $H_2O$ or hydrogen chloride (J.P. Kennedy, S.Y. Huang, S.C. Feinberg, J. Polym. Sci., 15, 2801 (1977); J.P. Kennedy, Polym. Bull. 15, 201 (1986)). However, with the initiation systems according to the invention, polymerization of isobutene occurs at both temperatures.

Because the polymerization temperature does not have an essential effect on the molecular mass of the obtained polymer, e.g. polyisobutylenes, it is obvious that e.g. 2,4-dichloropentane (I), after interaction with $BCl_3$, behaves in the polymerization system as a typical initiation-transfer agent ('inifer', II) according to the

following scheme:

Initiation:

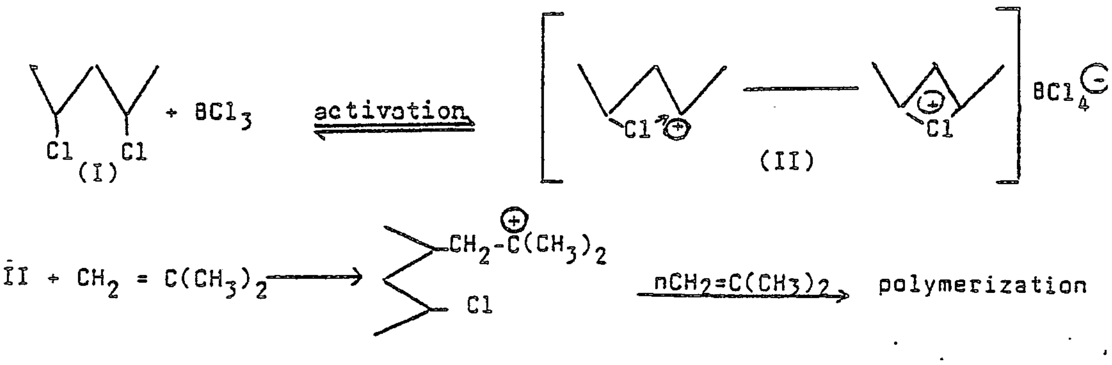


Chain transfer

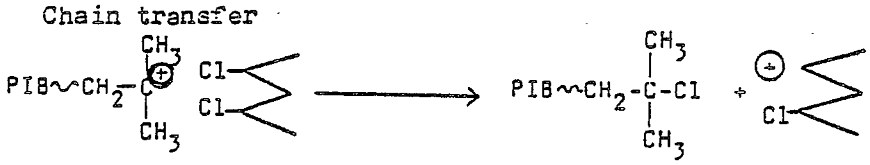

Because 2,4-dichloropentane is a model compound for PVC (dimer), it can be presumed that an analogous mechanism of initiation and chain transfer occurs also in the case of PVC and other oligomeric and polymeric substances containing chlorine atoms on secondary carbon atoms in mutual 1,3-positions. With respect to the high concentration of these chlorine atoms, for example, in PVC, this polymer becomes, after interaction with $BCl_3$, a 'polyinifer'. If a vinyl chloride/2-chloropropene copolymer (VC/2-CP) is used as an initiator in the presence of $BCl_3$, it can be supposed that anchored cationic centres are preferably formed on the tertiary carbon atoms according to the following scheme.

Initiation with the system t-butyl chloride/$BCl_3$ was proved in the polymerization of isobutene earlier (L. Toman, S. Pokorný, J. Spěváček , J. Daňhelka , Polymer 27, 1121 (1986)).

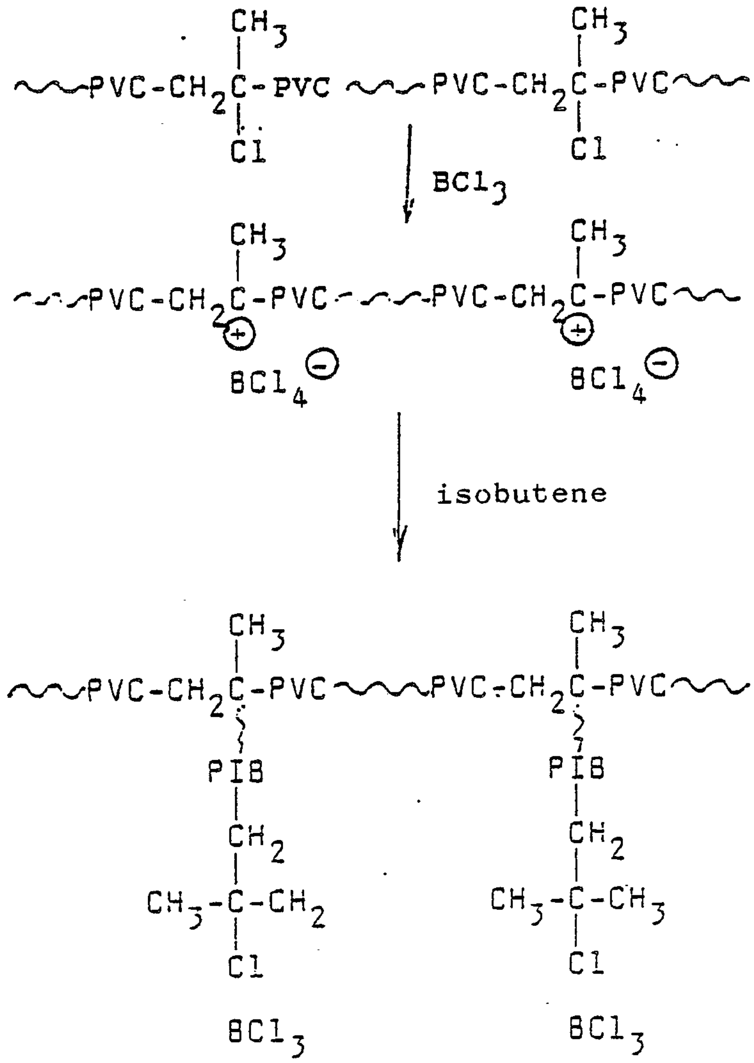


Chlorination of the end of polyisobutene chains with extinction of counterions according to $\sim C^{\oplus}\, BCl_4^{\ominus} \rightarrow \sim C\text{-}Cl + BCl_3$ was already described earli er (J.P. Kennedy, S.Y. Huang, and Feinberg, J. Polym. Sci. 15, 2801 (1977); J.P. Kennedy and E. Maréchal, Carbocationic Polymerization, A. Wiley-Interscience Publication, New York 1982).

The polymers or macromers containing chlorine on the tertiary carbon atom may, according to the invention, both initiate the cationic polymerization and take the part in the chain-transfer reactions, thus becoming also polymeric initiation-transfer compounds ('polyinifers'), thus leading to functionalized graft copolymers, which is an important advantage of this invention. The initiation-transfer reaction with a polyinifer may be illustrated by the following scheme, where the polyinifer is a vinyl chloride/2-chloropropene copolymer in connection with $BCl_3$:

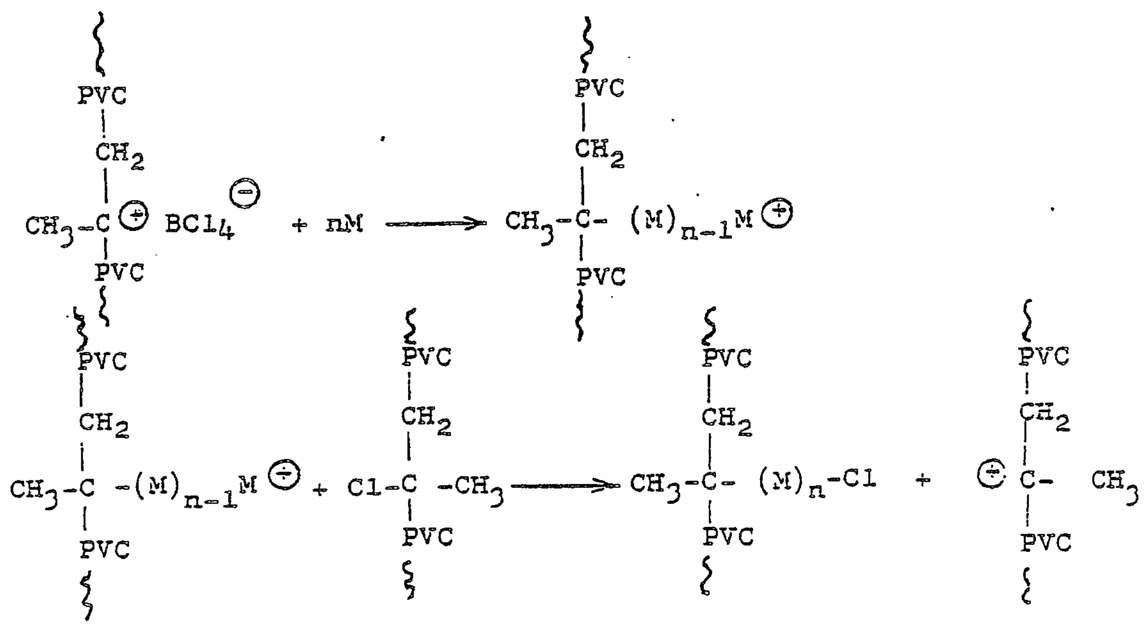

where n is the number of cationically polymerizing monomer molecules of type M.

The properties of the resulting products may be broadly influenced by choosing the extent of grafting and by the choice of a suitable initiator compound (A) having a number of carbon atoms ≧ 5 (low-molecular weight alkyl halides, oligomers, or polymers) and containing in the chain at least two chlorine atoms linked to secondary carbon atoms in mutual 1,3-positions, or by choosing an aliphatic initiator compound (A) having a number of carbon atoms ≧ 10 (oligomers or polymers) which contains at least one structural unit comprising a chlorine atome on a tertiary carbon atom. These products may be advantageously used as reactive polymers, for example, polyisobutene, butyl rubber, or as polymeric specialities or compatibilizers in incompatible mixtures of polymers, for example PVC-g-polyisobutylene or PVC-g-polyisobutylene-b-polystyrene copolymers. It is therefore obvious that the method according to the invention enables to prepare a number of "tailor made" graft copolymers with specific properties suitable for their broad utilization.

If, for example, hydrochlorinated or partially hydrochlorinated polyisoprene or butyl rubber is used, the polymerization with $BCl_3$ according to the invention may be represented by the scheme (where PIP means constitutional isoprene units $\{CH_2C(CH_3)=CH\text{-}CH2_2\}_n$ ):

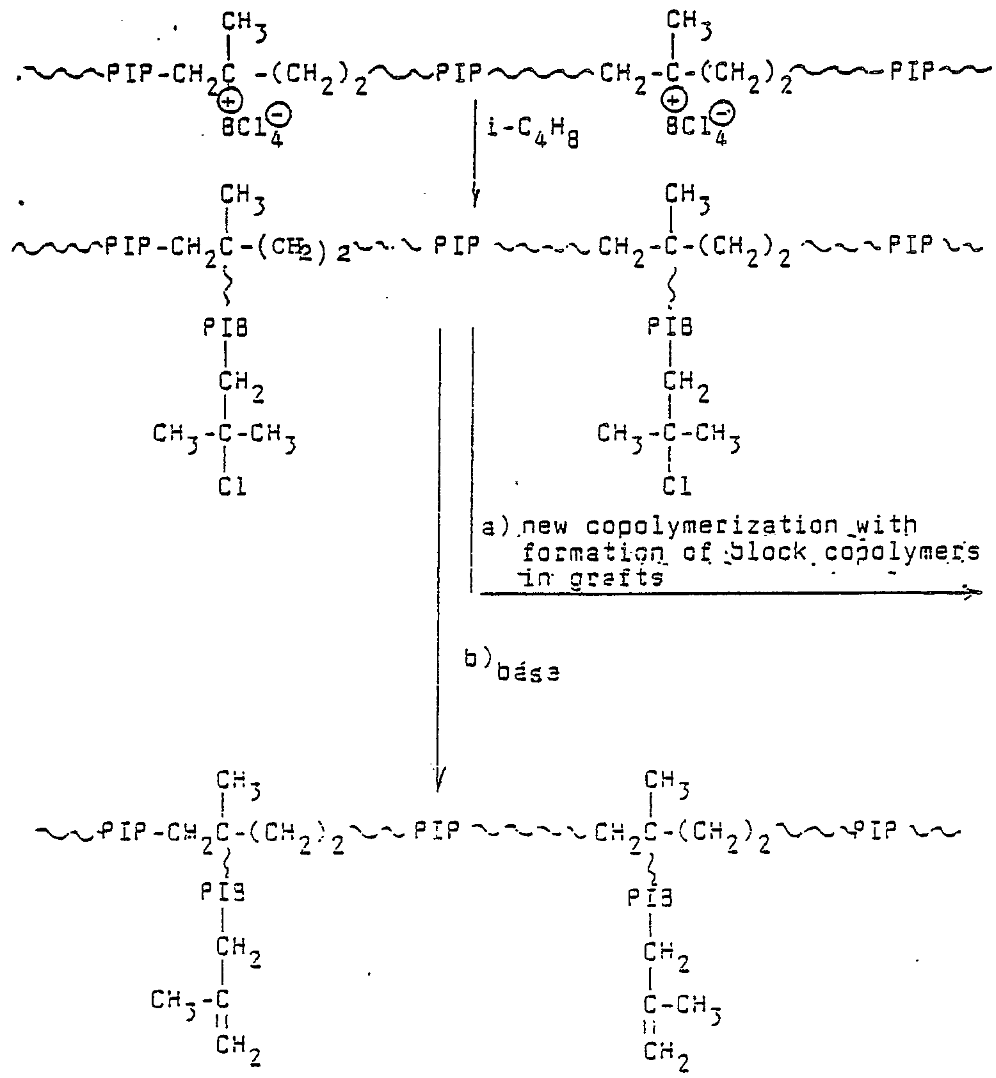


It is obvious, that new types of butyl rubber can be prepared by this method, i.e. isobutylene/isoprene copolymers with a high content of double bonds, which cannot be obtained by conventional industrial synthesis at temperatures around -100 °C with the initiation system $AlCl_3$/methyl chloride. Butyl rubber synthesized according to the invention represents an important polymeric material suitable above all for the preparation of new butyl rubber latices.

The produtcs obtained according to the invention contain the chemically linked initiation component, which corresponds to the active chlorine-containing organic compound used.

According to a preferred embodiment of the method according to the invention, for the (co)-polymerization in bulk, in the absence of solvents macromolecular initiator components (A) are used, particularly PVC, PVC comprising or being enriched with chloroallyl structures, e.g. by dehydrochlorination, chlorinated PVC, chlorinated poly(ethylene), chlorinated poly(propylene), hydrochlorinated poly(isoprene), and vinyl chloride/2-chloropropene copolymers.

If the (co)polymerization is carried out in the presence of polar solvents, i.e. in solution, it is preferred to use initiator systems comprising as active chlorine-containing organic compound of component A, low-molecular weight alkyl halides, oligomers, or polymers having a number of carbon atoms ≥ 5 in their chains where at least two chlorine atoms are linked to secondary carbon atoms in mutual 1,3-positions and/or all other aliphatic compounds having a number of carbon atoms ≥ 10, which contain at least one constitutional unit in their chains where chlorine is bound to a tertiary carbon atom; the Lewis acid of the co-initiator component B is again boron trichloride or a mixture thereof with ferric chloride.

Typical examples for initiator components A are 2,4-dichloropentane, 2,4,6-trichloroheptane, 2,4,6,8-tetrachlorononane, chlorinated paraffins, poly(vinyl chloride), chlorinated poly(vinyl chloride), chlorinated polyolefins, copolymers of vinyl chloride with 1-olefins and above all with 2-chloropropene, and hydrochlorinated polyisoprene or butyl rubber.

Typical polar solvents according to the invention are halogenated solvents such as methyl chloride, dichloromethane and ethyl chloride, or their mixtures with non-polar solvents, such as heptane and carbon tetrachloride, or their mixtures with aromatic solvents, such as, e.g., benzene and toluene, or polar halogenated monomers, such as vinyl chloride.

Provided that copolymers of vinyl chloride are used, particularly copolymers with 2-chloropropene, also titanium tetrachloride can be used as co-initiator B.

According to a preferred embodiment, the (co)polymerization is carried out in the beginning phase in bulk for a certain time, whereupon it is transferred at a predetermined time into a solution (co)-polymerization by addition of a polar medium.

In the following, the method according to the invention for preparing graft copolymers by cationic polymerization is further explained with reference to typical examples. In the following examples, the polymerizations were carried out in glass ampoules provided with an injection seal or in a glass reactor provided with a stirrer. The solutions of the initiator system, for example, of PVC or VC/2-CP copolymer with $BCl_3$ in dichloromethane ($CH_2Cl_2$), were prepared in glass ampoules equipped with a three-way polytetrafluoroethylene cock for dosing of components in a stream of nitrogen. The polymerizations were carried out under dry conditions in an atmosphere of dry nitrogen.

Polystyrene standards were used for simple comparison of molecular masses of polymers and copolymers. The molecular masses were read from the maxima of GPC (gel permeation chromatography) curves. Consequently, these values are apparently related to polystyrene. The GPC measurements were carried out in tetrahydrofurane solutions. Before use, the polymeric initiators were dissolved e.g. in dichloromethane and dried over molecular sieves for 24 hours.

The following abbreviations are used in the examples:

M: apparent molecular mass of polymers/copolymers;

PVC-(A): PVC with an increased content (around 0.15 mol-%) of chloroallyl structural units;

VC/2-CP: a vinyl chloride/2-chloropropene copolymer;

PVC(I): common suspension type PVC (prepared in the laboratory);

PVC(II): a commercial suspension type PVC (Neralit S-682, Spolana, Neratovice, CS).

## Example 1

Powdery PVC -(A) (M ~ 160,000) was activated with boron trichloride in a dilatometer at laboratory temperature for 48 h. The dilatometer was then cooled down to -78 °C, and isobutene was introduced by condensation under stirring giving a mixture which contained 0.6 g PVC-(A), 10 ml isobutene, and $4.6 \cdot 10^{-3}$ mol $BCl_3$. The grafting of isobutene on PVC-(A) was followed at -78 °C for 150 h. Then the reaction was stopped by addition of methanol, and the whole content of the dilatometer was dissolved in tetrahydrofuran (THF). THF and volatile components were then evaporated in a rotary evaporator, and the rubbery product obtained was dried in a vacuum oven at 40 °C for 48 h. The volume contraction of the monomer observed during 150 h was recalculated by means of the obtained total conversion (54.6 %) to obtain the conversion curve (o) shown in Fig. 1. The dilatometric record proves that the polymerization of isobutene proceeded without kinetic termination even after a very long time of 150 h.

In the absence of PVC-(A) under the same experimental conditions (-78 °C ; same concentrations of $BCl_3$ ($4.6 \cdot 10^{-3}$ mol) and isobutene (10 ml)), the reference dilatometric measurement did not show a contraction of the system even for 150 h, and no polymer was found after evaporation of volatile compounds. The curve of the reference measurements is also shown in Fig. 1 (●). Under the same experimental conditions, no volume contraction was also observed in the system t-BuCl/$BCl_3$/isobutene (0.6 g t-BuCl; $4.6 \cdot 10^{-3}$ mol $BCl_3$; 10 ml isobutene) for 150 h and no polymer was found as follows from the corresponding dilatometric record in Fig. 1 (◊).

So far, such a course of isobutene polymerization in bulk was not yet observed. The non-reactivity of isobutene, which was found under the same experimental conditions with initiation systems on the basis of $BCl_3$ and a protogenic substance such as $H_2O$ or HCl, tert-butyl chloride (t-BuCl)/$BCl_3$, and $CH_3CH{=}CHCH(Cl)C_5H_{11}/BCl_3$ (see Table 1 and Fig. 1), confirms that a completely new mechanism of polymerization has been discovered in the present invention, which has not yet been described in the literature relating to the cationic synthesis of polyisobutene. The experimental data also prove that the polymerization rate of isobutene increases after addition of a polar solvent, e.g., dichloromethane, if the initiation systems PVC/$BCl_3$ or VC-2-CP/$BCl_3$ were used.

**Example 2**

A powdery VC/2-CP copolymer (M ~ 160,000) was activated with $BCl_3$ for 8 h at laboratory temperature. This initiation system was then cooled down to -78 °C and mixed at this temperature with the monomer giving a mixture consisting of 30 ml isobutene, 1 g VC/2-CP copolymer, and $6.8 \cdot 10^{-3}$ mol $BCl_3$. Within 3 min, PIB started to grow on the VC/2-CP copolymer, and the volume of the solid particles increased with time. The reaction mixture was kept for 48 h at about -70 °C. Then, THF was added to the system, and the product was dissolved at ambient temperature. THF and volatile fractions were evaporated in a rotary evaporator and then in a vacuum oven. The rubbery product (M ~ 3,000,000) was obtained at a total conversion of 25 %.

**Example 3**

Powdery PVC-(A) (M ~ 160,000) was activated with $BCl_3$ for 24 h at laboratory temperature. This initiator system was then cooled down to -78 °C and mixed at this temperature with the monomer to obtain a mixture containing 30 ml isobutene, 1 g PVC-(A), and $6.1 \cdot 10^{-3}$ mol $BCl_3$. PIB started to grow within 3 min on the PVC-(A) particles, and the reaction system was then kept for 48 h at about -70 °C. THF was then added to the mixture, and the product was dissolved at ambient temperature. After evaporation of THF and volatile fractions, the rubbery product (M ~ 2,000,000) was obtained at a total conversion of 30 %.

**Example 4**

Commercial powdery PVC (M ~ 170,000) was mixed at -78 °C

a) with $BCl_3$, and after 10 min isobutene was condensed into the system,

or

b) PVC was first mixed with the monomer, and $BCl_3$ was then added as the last component.

The resulting mixtures contained 25 ml isobutene, $6.3 \cdot 10^{-3}$ mol $BCl_3$ and 1.3 g PVC. PIB started to grow on the PVC particles within 5 min, whereas the liquid phase (monomer) was clear for several tens of minutes and did not change its viscosity. After three days at about -70 °C, the product consisting of agglomerates of PIB grafted onto particles of PVC was isolated from the system at a conversion of 200 %, based on PVC.

**Example 5**

a) Grafting of PVC with isobutene was carried out as in Example 4. 3 h after mixing the reaction components PVC, $BCl_3$ and isobutene at -78 °C, dichloromethane was slowly added into the system in an amount of 35 ml, or ethyl chloride in an amount of 40 ml. In both cases, the addition of polar solvent sped up the polymerization reaction, and, after further 3 h at -78 °C, the rubbery product (M ~ 2,000,000) was isolated at a total conversion of 32 %.

b) Grafting of VC/2-CP copolymer with isobutene was carried out according to Example 4, with the exception that instead of boron trichloride the same amount of titanium tetrachloride was used, and the reaction mixture was kept in darkness. The reaction was stopped after 4 h as described in Example 2. The rubbery product (M ~ 2,000,000) was isolated at a total conversion of ~ 25 %.

**Example 6**

A dichloromethane solution containing 1.4 mol/l 2,4-dichloropentane and 0.9 mol/l $BCl_3$ was prepared at -40 °C. This solution was heated to laboratory temperature and then activated under stirring for 48 h (in the following, the term activation time designates the time of interaction of the initiator system components, for example, 2,4-dichloropentane, with a co-initiator, for example, $BCl_3$). The solution was then cooled down to -70 °C or -20 °C and dosed into an isobutene solution in dichloromethane. The concentrations of the components in the batch after mixing were as follows: Isobutene 4.6 mol/l; 2,4-dichloropentane 0.3 mol/l; $BCl_3$ 0,21 mol/l. The polymerizations carried out at -70 °C and -20 °C were stopped after 12 h by addition of methanol at a conversion > 90 %.

The isolated PIB polymers were characterized by gel permeation chromatography (GPC) and $^1$H-NMR

spectroscopy. The polymers obtained at both -70 °C and -20 °C had an oily appearance and almost the same molecular mass, whereby only the PIB prepared at -70 °C had a bimodal GPC record showing the presence of a small amount of a high-molecular weight fraction (about 18 mass-%), as may be seen from Fig. 2, curve 1, the low-molecular mass fraction having a molecular mass of about 4000. It also follows from Fig. 2 that this high-molecular weight fraction was probably formed due to protogenic initiation, as may be seen from the comparison with curve 2 which represents the GPC record of a polyisobutene prepared by protogenic initiation with $H_2O/BCl_3$ at -70 °C. The conclusions from GPC analysis are in agreement with the results obtained by $^1$H-NMR spectroscopy. The NMR spectra proved that no resonance band occurs in the $\tau$-region of 4.5 to 5.3 which would be an evidence for double bonds present in the polymer. It is thus obvious that no chain transfer with monomer took place in the polymerization. A small resonance in the region $\tau$ = 1.0 corresponding to t-butyl groups was found in polyisobutene prepared at -70 °C. A resonance band found in the region of $\tau$ = 3.5 may be assigned to methine hydrogen of the group -CHCl-. The intensity ratio of methine and t-butyl protons was in a good agreement with the mass proportion of fractions obtained from GPC chromatograms. The PIB prepared at -20 °C had only an unimodal GPC chromatogram, and its molecular mass M was ~ 4000.

## Example 7

The polymerization of isobutene was carried out at -20 °C as in Example 6, whereby 2,4,6-trichloroheptane was used as initiator component. The activation time of the initiator with the co-initiator was 24 h at 25 °C. The concentrations in the charge were: Isobutene 4.6 mol/l; 2,4,6-trichloroheptane 0.2 mol/l; $BCl_3$ 0.2 mol/l. The polymerization was carried out at -20 °C and stopped after 12 h at a conversion of 100 % by addition of methanol. Molecular mass M of the product was ~ 4000.

## Example 8

The polymerization of isobutene initiated by PVC in dichloromethane at -70 °C was carried out with dosing the initiator system into the monomer. The initiator system containing PVC prepared in the laboratory (designated as PVC(I)) and $BCl_3$ in dichloromethane was activated for 20 min at ambient temperature, cooled down to -70 °C, and dosed into the monomer. The concentrations of the components in the batch after mixing were as follows: Isobutene 4.6 mol/l; $BCl_3$ 0.14 mol/l; PVC(I) 8.8 g/l.

The polymerization was stopped after 35 min by addition of methanol. The product (M ~ 450,000) was obtained at a conversion of 28 %).

GPC analysis of product proved that, with the initiator system PVC/$BCl_3$, the resulting copolymer PIB/PVC has under the given experimental conditions a higher molecular mass and a narrower distribution of molecular masses, in comparison with PIB which resulted in reference polymerizations without PVC. The polymerization of isobutene was initiated in these cases by the residual water present in the system (protonic initiator $H_2O/BCl_3$); the results are shown in Table 2.

Table 2

| Comparison of the yield of polyisobutene/PVC copolymer (polymerization of isobutene (4.6 mol/l) initiated with PVC in the presence of $BCl_3$ in dichloromethane at -70 °C) | | | | |
|---|---|---|---|---|
| Method of initiation | Time of polymerization | | | Molecular mass M |
| | 15 min | 30 min | 45 min | |
| | Conversion (%) | | | |
| Polymerization without PVC (protogenic initiation)[a] | 1.5 | 2.3 | 4.5 | $3.5 \cdot 10^5$ - $3.9 \cdot 10^5$ |
| | | | 0.12[b] | |
| Addition of $BCl_3$ to mixture of monomer with PVC(I) as the last component | 8.0 | 25.3 | 28.1 | $\sim 4.5 \cdot 10^5$ |
| | | | 14.7[b] | $\sim 4.5 \cdot 10^5$ |
| Addition of mixture PVC(I)-$BCl_3$ in $CH_2Cl_2$ (activated for 8 h) to the monomer | 14.0 | 17 | 28.3 | $\sim 1.0 \cdot 10^6$ |
| Addition of mixture PVC(II)-$BCl_3$ in $CH_2Cl_2$ (activated for 8 h) to the monomer | 17.5 | 23.1 | 29.5 | $\sim 1.0 \cdot 10^6$ |

[a] polymerization proceeds by residual water in the system; $BCl_3$ 0.140 mol/l;
[b] $BCl_3$ 0.046 mol/l; PVC(I) prepared in the laboratory (M = 150,000); PVC(II) commercial product (M~170,000); PVC 12.3 g/l; conversion = mass of product/mass of isobutene + ma s of PVC.

**Example 9**

Polymerizations of isobutene were initiated by PVC at -70 °C in such a way that $BCl_3$ was added to the polymerization batches as the last component. A solution of PVC(I) in dichloromethane was dosed into the solution of monomer, and $BCl_3$ was then added during 5 min under continuous stirring. The concentrations of the components in the batch after mixing were as follows: Isobutene 4.6 mol/l; $BCl_3$ 0.14 mol/l; PVC(I) 12.3 g/l.

The polymerizations were stopped by addition of methanol after 15 min, 30 min, and 45 min, respectively. The polymerization was carried out at the same concentration of monomer and PVC and also at a low concentration of $BCl_3$, viz. 0.046 mol/l. The obtained yields are compared in dependence of the time of polymerization and the $BCl_3$ concentration in Table 2. GPC analysis of the products proved that, already after 30 min of polymerization, the total PVC had reacted with isobutene.

**Example 10**

Polymerizations of isobutene were initiated with PVC at -70 °C in such a way that the initiator system PVC(I) -$BCl_3$ or PVC(II) - $BCl_3$ (PVC(II) commercial product, M ~ 170,000) was added into the solution of the monomer in dichloromethane. The initiation system in dichloromethane was activated for 8 h at ambient temperature. The concentrations of monomer and PVC were the same as in Example 9. The yields are indicated in Table 2 in dependence of the polymerization time. The results show also that a significant increase of the molecular mass (M ~ $1.0 \cdot 10^6$) of the products occurs if activated PVC is used.

**Example 11**

The polymerization of isobutene initiated with PVC was carried out as in Example 8. After mixing the concentrations of the components in the batch were as follows: Isobutene 4.5 mol/l; $BCl_3$ 0.06 mol/l; PVC(I) 8.8 g/l. The product was isolated after 3 h at a conversion of 41 % (M ~ 440,000). Fig. 3 shows GPC records where curve 1 relates to PVC, and curves 2 and 3 relate to PIB/PVC copolymers. A polymerization time of 12 h gave a conversion of > 80 %. If the concentration of $BCl_3$ was increased to 0.12 mol/l, the conversion after 12 h was ~ 100 %.

## Example 12

Copolymerization of isobutene with isoprene in ethyl chloride initiated with PVC was carried out at -78 °C. PVC(I) was added into the mixture of monomers first, and then $BCl_3$ as the last component. Dosing of PVC and $BCl_3$ was carried out in ethyl chloride. After mixing at -78 °C, the concentrations of the components in the batch were as follows: Isobutene 4.5 mol/l; isoprene 0.100 mol/l; $BCl_3$ 0.09 mol/l; PVC 8.8 g/l. The product obtained after 12 h (M ~ 330,000) had an unsaturation content of 1.2 mol-% at a conversion of ~ 90 %.

## Example 13

Copolymerization of isobutene with isoprene in dichloromethane initiated with PVC was carried out at -78 °C. The initiation system PVC(II) - $BCl_3$ in dichloromethane was activated as in Example 10 and added to the mixture of monomers. The concentrations of the components in the batch after mixing were as follows: Isobutene 4.3 mol/l; isoprene 0.129 mol/l; PVC 9 g/l; $BCl_3$ 0.09 mol/l. The product obtained after 12 h (M ~ 270,000) had an unsaturation content of 1.8 mol-% at a conversion of ~ 90 %.

## Example 14

A PVC - $BCl_3$ mixture in dichloromethane was activated according to Example 10. After cooling down to -50 °C, the concentrations of the components were as follows: PVC(II) 6 g/l; $BCl_3$ 0.05 mol/l. A solution of styrene or α-methylstyrene in dichloromethane was continuously slowly introduced into this mixture under stirring and at a rate of $1.8 \cdot 10^{-2}$ mol of monomer/min. The dosing was concluded after 1 h at a conversion of > 90 %. By comparison of the refractometric record (RI) and the spectrometric record in the ultraviolet region (at 254 nm) in the GPC analysis, it was proved that styrene/PVC copolymers and α-methylstyrene/PVC copolymers, respectively, were formed.

## Example 15

Copolymerization of styrene or α -methylstyrene on PVC was carried out according to Example 14. In the step of activation of PVC(II), it was also added powdery ferric chloride in a concentration of 0.03 mol/l. GPC analysis proved the formation of styrene/PVC copolymers and α-methylstyrene/PVC copolymers, respectively.

## Example 16

Copolymerization of styrene or α -methylstyrene on PVC was carried out at -50 °C. PVC, titanium tetrachloride and ferric chloride in ethyl chloride were mixed at -50 °C for 3 h. The concentrations of the components were then as follows: $TiCl_4$ 0.05 mol/l; PVC(I) 6.6 g/l; $FeCl_3$ 0.1 mol/l. The solution of the monomer in ethyl chloride was then added to this mixture according to Example 14. GPC analysis proved the formation of styrenePVC copolymers and α -methylstyrene/PVC copolymers, respectively,

## Example 17

Copolymerizations of isobutene with 1,3-butadiene, 1,3-pentadiene, or 2,3-dimethylbutadiene-1,3 initiated with PVC were carried out at -78 °C. A mixture of PVC(I) or PVC(II) and boron trichloride in ethyl chloride was stirred at -20 °C for 3 h. The resulting initiator system was then added to a mixture of the monomers in dichloromethane at -78 °C. After mixing, the concentrations of the reaction components in the batch were as follows: Isobutene 6.0 mol/l; diolefinic monomer 0.6 mol/l; PVC 9.0 g/l; $BCl_3$ $9 \cdot 10^2$ mol/l. The copolymerizations were stopped by addition of methanol after 90 min when the conversion was 31 %. The product had a molecular mass M of ~ 300,000 and an unsaturation content of ~ 1.3 mol-%.

**Example 18**

Grafting with isobutene was carried out in dichloromethane. A dichloromethane solution of a vinyl chloride/2-chloropropene copolymer(I) (VC/2-CP)(I); M = 60,000; content of 2-chloropropene structural units in the polymer chain 5.1 mol-% was prepared beforehand and then used for initiation. The concentrations of the reaction components after mixing with the monomer at -20 °C were as follows: Isobutene 5 mol/l; VC/2-CP 12.0 g/l; $BCl_3$ $4.5 \cdot 10^{-2}$ mol/l. The reaction mixture was stirred at -20 °C for 5 min, then cooled down to -70 °C and, after 1 h, the reaction was stopped by the addition of methanol at a conversion of about 30 mass-%, based on isobutene. The product (M ≐ 330,000) was partially soluble in heptane and comprised a swollen gel.

**Example 19**

Grafting with isobutene was carried out in a dichloromethane solution using the initiator system as in Example 18. The concentrations after mixing the reaction components with the monomer at -20 °C were as follows: Isobutene 4.3 mol/l; VC/2-CP 5.6 g/l; $BCl_3$ $2.25 \cdot 10^{-2}$ mol/l. After 10 min of stirring at -20 °C, the reaction mixture was cooled down to -75 °C, and the reaction was stopped after 25 min by addition of methanol at a conversion of about 30 mass-%, based on isobutene. Comparison of the gel-permeation chromatogram of the product with that of the initial copolymer VC/2-CP proved that all copolymer reacted with isobutene. The product (M ~ 450,000) had the character of an elastic rubber.

**Example 20**

Grafting with isobutene was carried out as in Example 18. The concentrations after mixing the reaction components with the monomer at -20 °C were as follows: Isobutene 4.3 mol/l; VC/2-CP 4.87 g/l; $BCl_3$ $1.6 \cdot 10^{-2}$ mol/l. After 3 min of stirring at -20 °C, the reaction mixture was kept at this temperature for 2 h and then cooled down to -75 °C. After 20 min of stirring at -75 °C, the reaction was stopped by addition of methanol at a conversion of 35 mass-%, based on isobutene. Comparison of the GPC records of the product and the initial VC/2-CP copolymer proved that all copolymer reacted with isobutene. The records are shown in Fig. 4, where curve 1 corresponds to VC/2-CP and curve 2 to the product. The product (M ≐ 470,000) had the character of an elastic rubber.

**Example 21**

Grafting with isobutene was carried out as in Example 18, whereby titanium tetrachloride was used as co-initiator. After mixing the reaction components with the monomer at -20 °C, the concentrations were as follows: Isobutene 4.3 mol/l; VC/2-CP 11.3 g/l; $TiCl_4$ $1.1 \cdot 10^{-2}$ mol/l. After 5 min of stirring at -20 °C, the reaction mixture was cooled down to -60 °C, and the reaction was stopped after 1 h by addition of methanol at a conversion of about 80 mass-%, based on isobutene. The product (M ~ 140,000) was partially soluble in hexane and comprised a swollen gel.

**Example 22**

Grafting with a mixture of isobutene and isoprene was carried out in dichloromethane in the same way as in Example 18, whereby a mixture of $BCl_3$ and $FeCl_3$ was used as co-initiator. After mixing the reaction components with the monomers at -70 °C, the concentrations were as follows: Isobutene 4 mol/l; isoprene

0.08 mol/l; VC/2-CP 11.0 g/1; $BCl_3$ $3.8 \cdot 10^{-2}$ mol/l; $FeCl_3$ 3 g/l. After mixing, the reaction mixture was cooled down to -78 °C, and after 5 h the reaction was stopped by addition of methanol at a conversion of 70 %, based on isobutene. The product (M ~ 330,000) had an unsaturation content of ~ 1.4 mol-%.

## Example 23

Grafting with isobutene was carried out in dichloromethane. A solution of a vinyl chloride/2-chloropropene copolymer(I) (VC/2-CP (II); M = 28,000; content of 2-CP units in the polymer chain about 11.3 mol-%) with $BCl_3$ in dichloromethane was prepared beforehand and used for initiation. The concentrations after mixing of the reaction components with the monomer were as follows : Isobutene 6.5 mol/l; VC/2-CP (II) 11.2 g/l; $BCl_3$ $4.0 \cdot 10^{-2}$ mol/l. After 10 min of stirring at -20 °C, the reaction mixture was cooled down to -70 °C, and the reaction was stopped after 15 min by addition of methanol at a conversion of 18 %, based on isobutene. The product (M ~ 400,000) was partially soluble in hexane and comprised a swollen gel.

## Example 24

An ethyl chloride solution containing 31.8 g/l VC/2-CP (I) and $4.0 \cdot 10^{-2}$ mol/l $BCl_3$ was stirred for 1 h at ambient temperature and then cooled down to -50 °C. Isobutene was then slowly distilled into this mixture under continuous stirring. A sample withdrawn from the reaction mixture at a concentration of isobutene of 2.9 mol/l exhibited a molecular mass M of 90,000. Further additions of the monomer into the reaction mixture caused an increase of the molecular mass of the product. At an isobutene concentration of 7.1 mol/l, the product already had a molecular mass M of ~ 180,000. The products both with lower and higher molecular mass only swelled in hexane.

## Example 25

Grafting with styrene was carried out at -40 °C under slow continuous dosing of a dichloromethane solution of the monomer into a beforehand prepared and cooled initiator system in dichloromethane which contained 12.0 g/l VC/2-CP and $4.0 \cdot 10^{-2}$ mol/l $BCl_3$. The solution of the monomer was dosed at a rate of $2 \cdot 10^{-3}$ mol styrene/min. The dosing was stopped after 1 h at a conversion of ~ 90 %, based on styrene. The grafting of styrene on the VC/2-CP copolymer was proved by comparison the gel permeation chromatograms obtained with RI and UV detection.

## Example 26

Grafting of $\alpha$-methylstyrene and of a mixture of styrene and $\alpha$-methylstyrene was carried out as in Example 25. the initiation system contained 10.0 g/l VC/2-CP (I), $3 \cdot 10^{-2}$ mol/l, $BCl_3$ and 0.4 g/l $FeCl_3$. The solution of the monomer or monomer mixture was dosed into the initiator system at a rate of $2 \cdot 10^{-3}$ mol/min. The molar ratio of styrene to $\alpha$-methylstyrene was 1:1. The grafting of aromatic monomers on the VC/2-CP copolymer was proved by comparison of RI and UV records of GPC analysis of the product.

## Example 27

Grafting of polyisoprene rubber and commercial butyl rubber with vinylaromatic monomers and isobutene was carried out in the following way:

a) Pure natural rubber and commercial butyl rubber, i.e. an isobutene/isoprene copolymer which contained 2.4 mol-% of isoprene units in the chain, were hydrochlorinated in a benzene solution at 5 °C for 3 min or 6 h. After isolation, the products were dried in benzene first with calcium chloride ($CaCl_2$) and subsequently over molecular sieves.

b) The hydrochlorinated products were used as initiators in combination with $BCl_3$ or $BCl_3/FeCl_3$ in the form of solutions in a dichloromethane/benzene mixture at -40 °C. Slow addition of styrene or $\alpha$-methylstyrene in a dichloromethane/benzene mixture into the beforehand prepared initiator system was

carried out as in Example 25. The grafting of an aromatic monomer onto hydrochlorinated natural rubber and butyl rubber was proved by comparison of the RI and UV records of GPC analysis of the products. For example, in the case of grafting of the hydrochlorinated rubber with styrene, the molecular mass M was increased from 240,000 to 320,000.

c) After completing the dosing of styrene, the reaction mixture was stirred at -40 °C for 1 h. Then isobutene was slowly added by condensation into the reaction mixture. Molecular mass M of the product was increased to ~ 380,000.

**Example 28**

Grafting with a mixture of isobutene and 2-chlorobutadiene-1,3, (chloroprene) on copolymer VC/2-CP (I) was carried out in dichloromethane at -75 °C. A mixture of VC/2-CP (I) and boron trichloride in dichloromethane was stirred at -10 °C for 1 h. The resulting initiator system was then added to a mixture of the monomers at -75 °C. After mixing of the reaction components, the batch contained 4,0 mol/l isobutene, 0.18 mol/l chloroprene, 9 g/l VC/2-CP (I) and $3{,}8 \cdot 10^{-2}$ mol/l boron trichloride. The reaction was stopped by addition of methanol after 3 h at a conversion of about 43 mass-%, based on isobutene. The product (M ~ 270,000) had the character of an elastic rubber and an unsaturation content of ~ 2 mol-%.

**Example 29**

PVC (II) (0.3 g) was first mixed with vinyl chloride (10 ml) and $BCl_3$ (0.3 ml). 3 h after the reaction components were mixed at -78 °C, isobutene was slowly added to the system in an amount of 6 g. After 1 h, a product with rubbery character (M ~ 400,000) was isolated at a total conversion of 30 %. The product was partially soluble in hexane and comprised a swollen gel.

**Claims**

1. Initiator systems for the homopolymerization, copolymerization or graft copolymerization of cationically polymerizable monomers,
**characterized** in that they consist of

(A) an initiator component
consisting of at least one aliphatic low-molecular mass, oligomeric and/or polymeric active chlorine-containing substance
and

(B) a co-initiator component
consisting of at least one Lewis acid.

2. Initiator systems according to claim 1, characterized in that the active chlorine-containing substance of initiator component A comprises chlorine atoms in its aliphatic chain which are linked to secondary and/or tertiary carbon atoms or which are activated by an adjacent C=C double bond.

3. Initiator systems according to claim 1 or 2, characterized in that the active chlorine-containing substance of initiator component A comprises at least two chlorine atoms linked to secondary carbon atoms being in mutual 1,3-position and has ≥ 5 carbon atoms, and/or it comprises at least one structural unit wherein a chlorine atom is linked to a tertiary carbon atom and has ≥ 10 carbon atoms.

4. Initiator systems according to one of claims 1 to 3, characterized in that the active chlorine-containing substance of initiator component A comprises at least one structural unit of the general formula

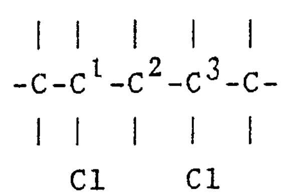

wherein two active chlorine atoms are linked to secondary and/or tertiary carbon atoms being in mutual 1,3-

position to each other.

5. Initiator systems according to one of claims 1 to 4, characterized in that the active chlorine-containing substances of initiator component A are 2,4-dichloropentane, 2,4,6-trichloroheptane, 2,4,6,8-tetrachloro nonane, poly(vinyl chloride), poly(vinyl chloride) comprising or being enriched with chloroallyl structures, chlorinated poly(vinyl chloride), chlorinated poly(ethylene), chlorinated poly(propylene), vinyl chloride/ 2-chloropropene copolymers, hydrochlorinated poly(isoprene), hydrochlorinated butyl rubber, chlorinated paraffins and/or copolymers of vinyl chloride, preferably vinyl chloride/2-chloropropene copolymers.

6. Initiator systems according to one of claims 1 to 5, characterized in that the Lewis acids of co-initiator component B are selected from $BCl_3$, $TiCl_4$ and mixtures of $BCl_3$ and/or $TiCl_4$ with $FeCl_3$.

7. A method for preparing homopolymers, copolymers or graft copolymers of cationically polymerizable monomers by (co)polymerization of the monomers in the presence of an initiator system, characterized in that an initiator system according to one of claims 1 to 6 is used.

8. The method according to claim 7, characterized in that the (co)polymerization is carried out at a temperature of -100 to +20 °C and/or at a molar ratio of the Lewis acid(s) of co-initiator component B to the cationically polymerizable monomer(s) of $1 \cdot 10^{-5}$:1 to 50:1.

9. The method according to claim 7 or 8, characterized in that the (co)polymerization is carried out in bulk.

10. The method according to claim 7 or 8, characterized in that the (co)polymerization is carried out in the presence of one or more polar halogenated solvents or in the presence of mixtures of one or more polar halogenated solvents with one or more non-polar solvents or in the presence of one or more aromatic solvents or in the presence of mixtures of one or more polar halogenated solvents with one or more aromatic solvents, or in the presence of a polar halogenated monomer, preferably vinyl chloride.

11. The method according to one of claims 7 to 10, characterized in that the solvents are added during the (co)polymerization.

12. The method according to one of claims 7 to 11, characterized in that the cationically polymerizable monomers are selected from n-butene, isobutene, styrene, α-methylstyrene, isoprene, 1,3-butadiene, 2,3-dimethylbutadiene-1,3, 1,3-pentadiene, piperylene and chloroprene.

13. The method according to one of claims 7 to 12, characterized in that methyl chloride, ethyl chloride, dichloromethane and/or ethyl chloride are used as polar solvents.

14. The method according to one of claims 7 to 13, characterized in that heptane, cyclohexane, carbon tetrachloride, benzene and/or toluene are used as non-polar solvents.

15. The method according to one of claims 1 to 14, characterized in that a monomer mixture of isobutene and isoprene containing up to 15 mass-% diolefinic monomer is used.

16. Homopolymers, copolymers or graft copolymers obtainable according to the method of one of claims 7 to 15.

17. Use of the polymers according to claim 16 as functionalized polymers, reactive polymers, grafting base polymers, compatibilizers and rubber latices.

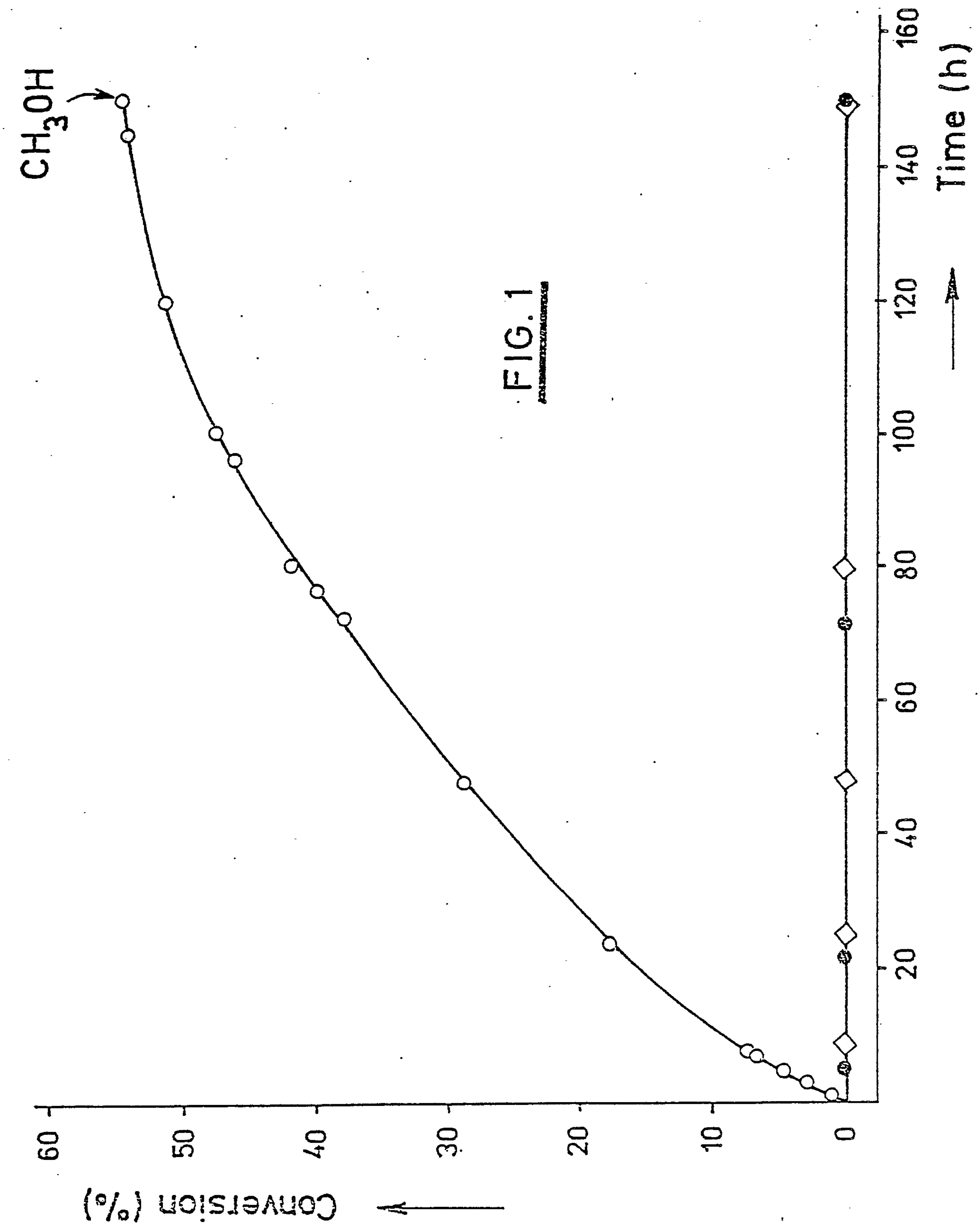
CH3OH
Conversion (%)
Time (h)
0
10
20
30
40
50
60
0
20
40
60
80
100
120
140
160

FIG. 1

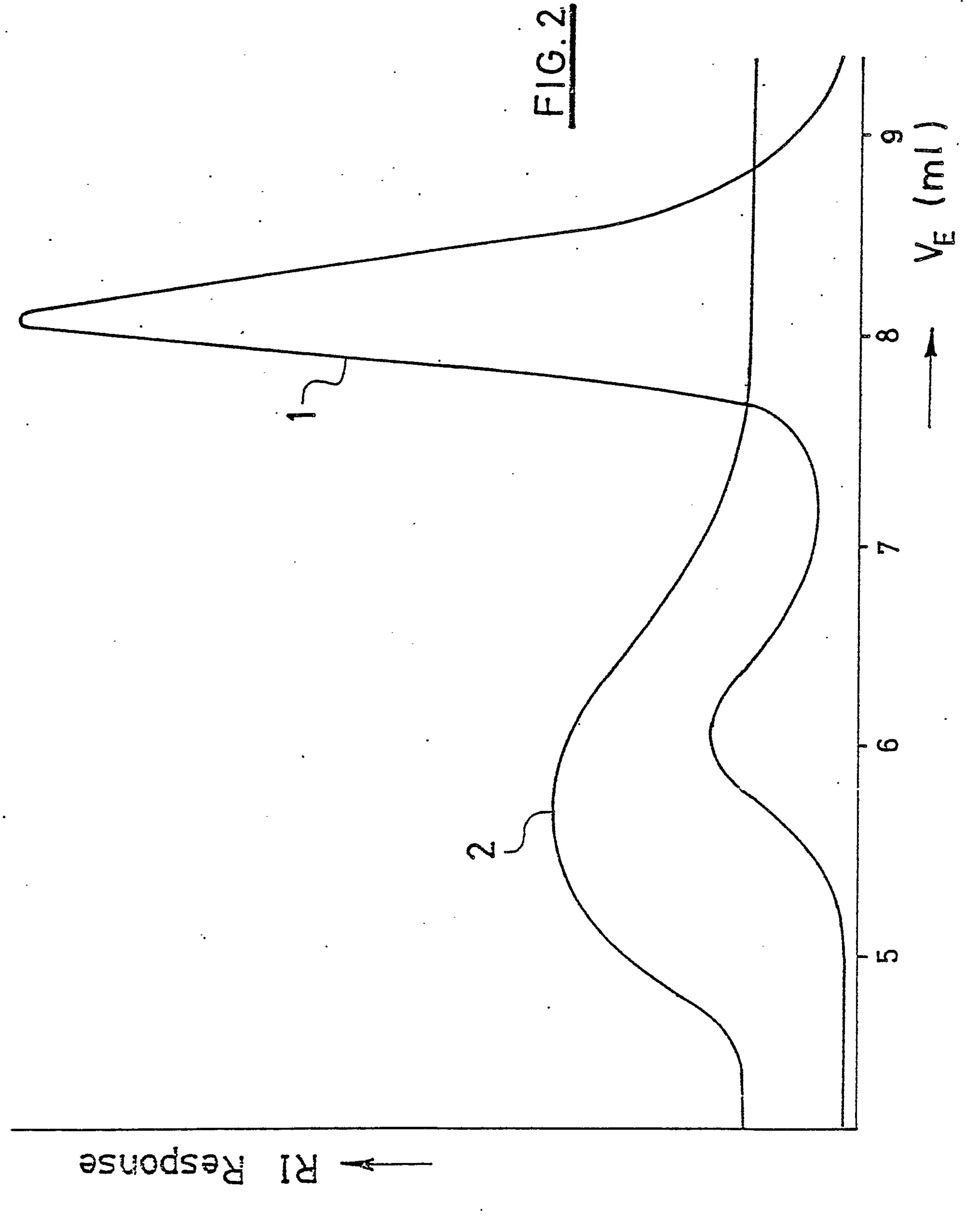


FIG. 2

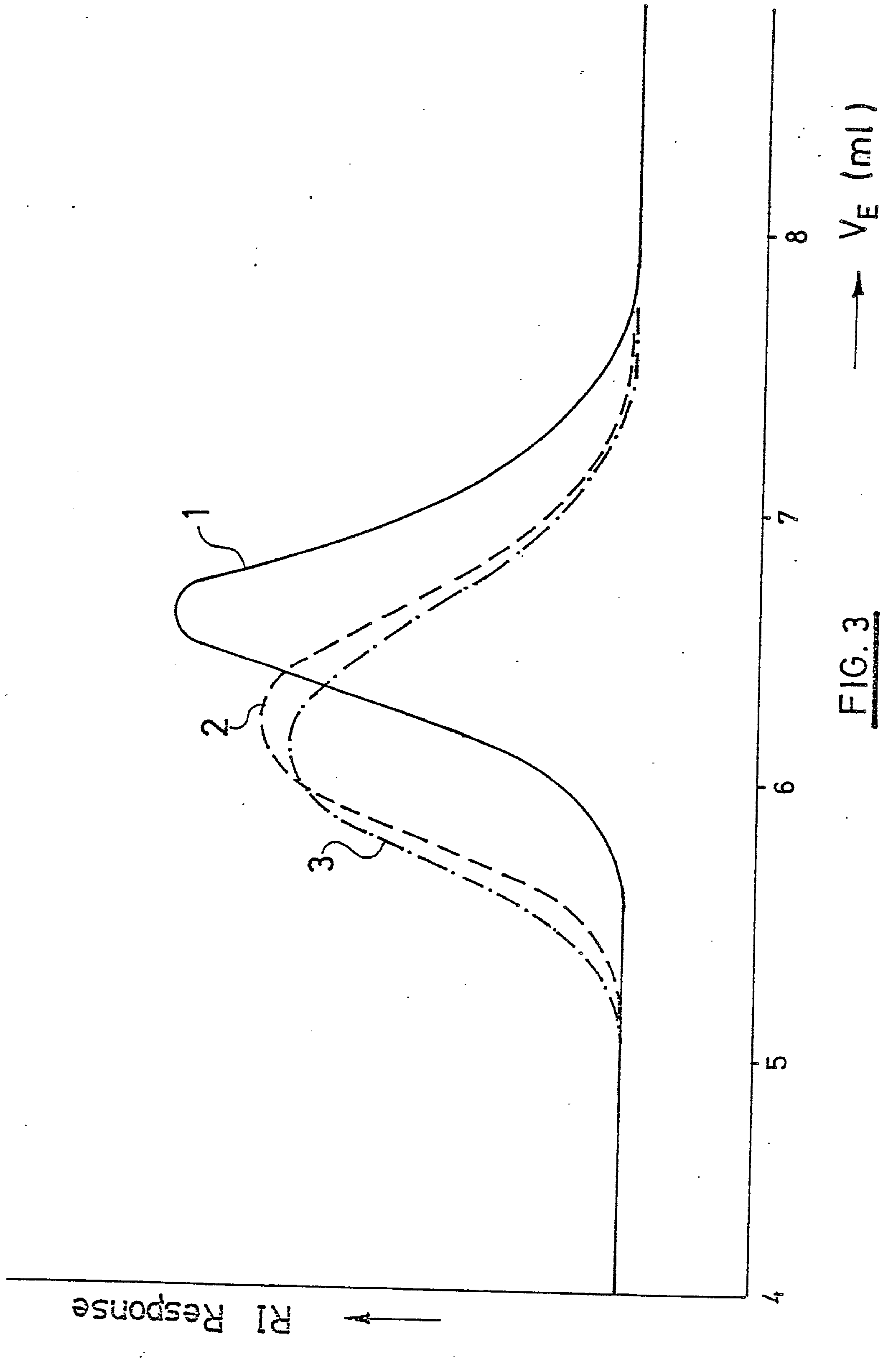


FIG. 3

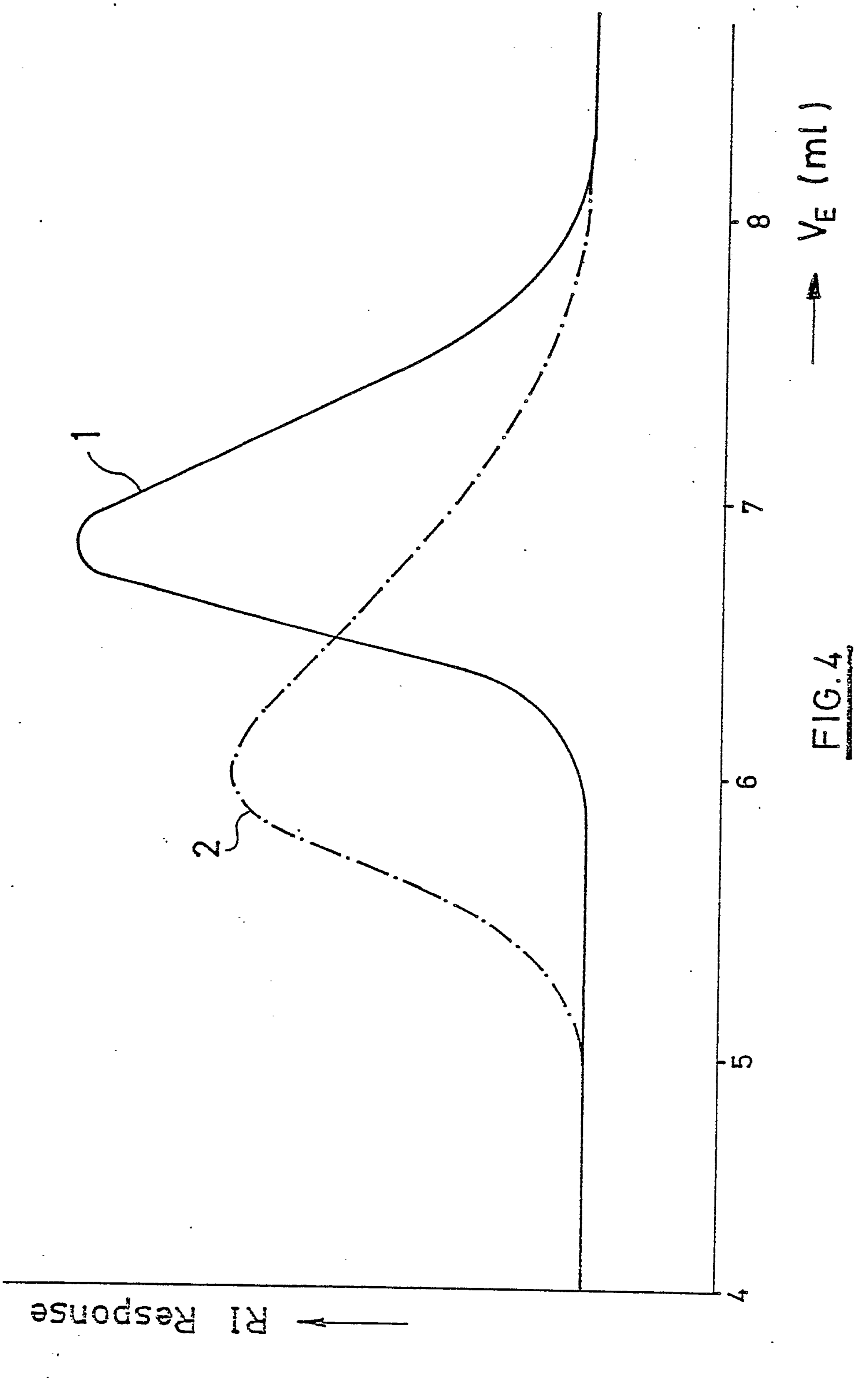


FIG.4